# EUROPÄISCHE PATENTANMELDUNG

(11) **EP 0 947 778 A2**
(43) Veröffentlichungstag der Anmeldung: **06.10.1999**
(21) Anmeldenummer: 99106031.0
(22) Anmeldetag: 25.03.1999
(51) Int. Cl.: F24D 3/14

(54) **Dämmelement für Flächenheizungsrohre, insbesondere Fussbodenheizungsrohre**

(30) Priorität: 03.04.1998 DE 29806128 U
(71) Anmelder: Hewing GmbH, D-48607 Ochtrup (DE)
(72) Erfinder: Dankbar, Bernhard, 48607 Ochtrup (DE); Claussen, Jörg, 48161 Münster (DE); Riesselmann, Franz-Josef, 49393 Lohne (DE)
(74) Vertreter: Hilleringmann, Jochen, Dipl.-Ing.

(57) **Zusammenfassung**

Das Dämmelement für Flächenheizungsrohre, insbesondere Fußbodenheizungsrohre, ist mit einer Dämmplatte (14) aus einem Wärme- und/oder Trittschalldämmaterial und einer Folie (16) versehen, die eine Vielzahl von sickenartigen Haltevorsprüngen (18) zum klemmenden Halten eines Rohres (12) aufweist. Zwischen der Dämmplatte (14) und der Folie (16) ist eine an beide angrenzende Zwischenschicht (22) angeordnet, die eine Mischung aus Kunststoffschaum-Partikeln (24) und einem Bindemittel (26) aufweist. Die Haltevorsprünge (18) sind mit dem Material der Zwischenschicht (22) ausgefüllt.

## Beschreibung

Die Erfindung betrifft ein Dämmelement für Flächenheizungsrohre und insbesondere ein Dämmelement für Fußbodenheizungsrohre.

Bei der Installation von Fußbodenheizungen werden Dämmplatten verwendet, die aus einem Wärme- und/oder Trittschalldämmungsstoff und einer Haltenoppen aufweisenden Folie auf der Oberseite des Dämmstoffs bestehen. Diese Art von Dämmelementen haben den Vorteil, daß die Fixierung der Rohre durch Einklemmung zwischen jeweils benachbarten Haltenoppen integraler Bestandteil der Plattenelemente ist. Es muß allerdings dafür gesorgt werden, daß die Haltenoppen beim Begehen der Dämmplatten, wie dies beim Verlegen des Rohres der Fall ist, nicht niedergedrückt oder in sonstiger Weise zerstört werden.

Um die Dämmplatten mit handelsüblichen Schneidwerkzeugen (Klingenmesser o.dgl.) schneiden zu können, ist die die Haltenoppen aufweisende (Ober-)Folie recht dünn ausgebildet. Die dünnwandigen Haltenoppen würden den Belastungen beim Begehen der Dämmplatten nicht standhalten können. Daher weist die Dämmaterialschicht der Dämmplatten der Form der Noppen der Folie entsprechend geformte Vorsprünge auf, über die die Noppenfolie übergestülpt wird. Die Noppen sind dadurch nicht mehr hohl sondern mit (Dämm-)Material ausgefüllt, was die zur Begehung der Platten erforderliche Stabilität hervorruft.

Die Herstellung von Dämmplatten mit strukturierter, d.h. Vorsprüngen aufweisender Dämmschicht ist jedoch mit erhöhten Kosten (Formkosten) verbunden. Bezüglich der Herstellungskosten günstiger wäre es, wenn als Dämmaterial handelsübliches Tafelmaterial, d.h. in Platten geschnittener Blockschaum eingesetzt werden kann. Wird jedoch auf derartiges Tafelmaterial eine mit Noppen versehene Oberfolie aufgelegt, so sind die zur Dämmschicht hin offenen Noppen hohl; eine Begehbarkeit der Oberfolie kann dann nur dadurch erreicht werden, daß die Materialstärke der Noppenfolie erhöht wird. Das wiederum hat den Nachteil, daß die Dämmplatte nicht mehr leicht zu zerschneiden ist.

Der Erfindung liegt die Aufgabe zugrunde, ein Dämmelement für Flächen- und insbesondere Fußbodenheizungsrohre zu schaffen, das mit Halteelementen zum klemmenden Halten der Rohre versehen ist und auf einfache Weise kostengünstig herstellbar ist, wobei die Trittfestigkeit und Begehbarkeit gegeben ist.

Zur Lösung dieser Aufgabe wird mit der Erfindung ein Dämmelement für Flächenheizungsrohre und insbesondere Fußbodenheizungsrohre vorgeschlagen, das versehen ist mit
- einer Dämmplatte aus einem Wärme- und/oder Trittschalldämmaterial und
- einer Folie, die eine Vielzahl von sickenartigen Haltevorsprüngen zum klemmenden Halten eines Rohres aufweist, wobei
- zwischen der Dämmplatte und der Folie eine an beide angrenzende Zwischenschicht angeordnet ist, die eine Mischung aus Kunststoff-Partikeln und einem Bindemittel aufweist, und
- die Haltevorsprünge mit dem Material der Zwischenschicht ausgefüllt sind.

Das erfindungsgemäße Dämmelement weist eine Dämmplatte aus einem Wärme- und/oder Trittschalldämmaterial auf, bei dem es sich insbesondere um EPS-Material handelt. Auf der Oberseite dieser Dämmplatte, d.h. auf der derjenigen Seite, die im verlegten Zustand der Dämmplatte dem Untergrund abgewandt ist, befindet sich eine zumeist tiefgezogene Kunststoffolie, in der eine Vielzahl von Haltevorsprüngen als Sicken ausgebildet sind. Diese Haltevorsprünge dienen der klemmenden Halterung der zwischen ihnen verlegten Rohre. Die Haltevorsprünge sind zur Oberseite hin geschlossen, jedoch zur Dämmplatte hin offen. Zwischen der Dämmplatte und der Kunststoffolie befindet sich bei dem erfindungsgemäßen Dämmelement eine Zwischenschicht, die einerseits an die Dämmplatte und andererseits an die Folie angrenzt. Diese Zwischenschicht weist eine Mischung aus Kunststoff-, insbesondere Kunststoffschaum-Partikeln und einem Bindemittel auf, bei dem es sich insbesondere um einen Schmelzkleber oder ein schmelzkleberähnliches Material, wie beispielsweise Wachs, handelt. Erfindungsgemäß befindet sich das Material der Zwischenschicht aber auch in den Haltevorsprüngen und füllt deren Hohlräume aus. Das aber bedeutet, daß nun die Kunststoffolie auf der Dämmplatte des erfindungsgemäßen Dämmelements begehbar ist. Diese Begehbarkeit wird erzielt, ohne daß besondere Anforderungen an die der Kunststoffolie zugewandte Oberseite der Dämmplatte gestellt werden. Insbesondere kann bei dem erfindungsgemäßen Konzept als Dämmplatte ein handelsübliches Tafel- oder Blockschaummaterial eingesetzt werden. Neben der Versteifung der Haltevorsprünge der Kunststoffolie bietet das Material der Zwischenschicht auch noch den Vorteil, daß die Dämmplatte und die Folie über dieses Material verbunden werden können.

Das erfindungsgemäße Dämmelement garantiert die Trittfestigkeit, obschon für die Kunststoffolie, wie bisher im Stand der Technik auch, ein dünnes Material verwendet wird. Derartiges Kunststoffmaterial läßt sich bequem mit handelsüblichen Schneidwerkzeugen wie Klingenmesser o.dgl. schneiden. Die unter der Folie des erfindungsgemäßen Dämmelements befindliche Zwischenschicht läßt sich ebenfalls leicht zerschneiden, da sie zum größten Teil aus einfach durchtrennbaren Kunststoffschaum-Partikeln besteht, denen ein im erstarrten Zustand ebenfalls schneidbares Bindemittel zugegeben ist. Das Dämmaterial der Dämmplatte selbst ist ebenfalls leicht mit einem Messer zu zerschneiden. Dennoch ist bei diesem Aufbau des erfindungsgemäßen Dämmelements gewährleistet, daß es begehbar ist, ohne daß die Gefahr besteht, daß die Haltevorsprünge zerstört werden.

Als Kunststoff-Partikel können Kunststoffreste verwendet werden, die zwecks Zerkleinerung gemahlen sind. Bei diesen Kunststoffresten kann es sich insbesondere um EPS-Restmaterialien oder andere Abfallmaterialien aus Kunststoffschaum handeln. Alternativ können die Partikel aus nicht geschäumtem Kunststoffmaterial bestehen, das durch das Bindemittel zusammengesintert ist. Das Bindemittel verbindet also wie im Falle eines Sinterkörpers die einzelnen Partikel.

Das Bindemittel hat vorteilhafterweise nicht nur die Aufgabe, die Kunststoffschaum-Partikel untereinander, sondern auch die Kunststoffolie mit der Dämmplatte zu verbinden. Im erstarrten, d.h. abgebundenen oder auch ausgehärteten Zustand weist das erfindungsgemäße verwendete Bindemittel einen Zustand auf, in dem es leicht zu schneiden ist. Insbesondere empfiehlt sich als Bindemittel ein Schmelzkleber.

Als Alternative zur Verbindung der Kunststoffolie mit der Dämmplatte durch Haftung der Kunststoffolie an der Zwischenschicht kann auch vorgesehen sein, die tiefgezogene Kunststoffolie von oben auf die mit Haltevorsprüngen versehene Zwischenschicht auf der Dämmplatte aufzustecken, wobei dieser Verbund allein durch Verklemmung hält.

Sofern als Materialmischung für die Zwischenschicht eine Zusammensetzung gewählt wird, die im wesentlichen feuchtigkeitsundurchlässig ist, kann auf eine Folie an der Oberseite des Dämmelements gänzlich verzichtet werden. In diesem Fall besteht das erfindungsgemäße Dämmelement aus der die Haltevorsprünge bildenden Zwischenschicht und der darunter angeordneten Dämmplatte.

Neben Polystyrol-Kunststoffschaum-Partikeln können auch noch Partikel aus anderen geschäumten Thermoplasten bzw. Polymermaterialien wie PP, PE oder PVC verwendet werden. Alternativ können auch nicht geschäumte Materialien eingesetzt werden; die aus diesen Materialien bestehenden Partikel werden durch das Bindemittel sozusagen gesintert und haften ähnlich den Partikeln eines Sinterkörpers aneinander, sind aber dennoch schnittfähig, so daß die Zwischenschicht mit einfachen Schneidwerkzeugen bearbeitet werden kann.

Nachfolgend wird anhand der Figuren ein Ausführungsbeispiel der Erfindung näher erläutert. Im einzelnen zeigen:
- Fig. 1: eine perspektivische Ansicht eines Dämmelements, teilweise geschnitten und gebrochen, und
- Fign. 2 bis 4: schematisch die einzelnen Verfahrensschritte zur Herstellung des Dämmelements gemäß Fig. 1.

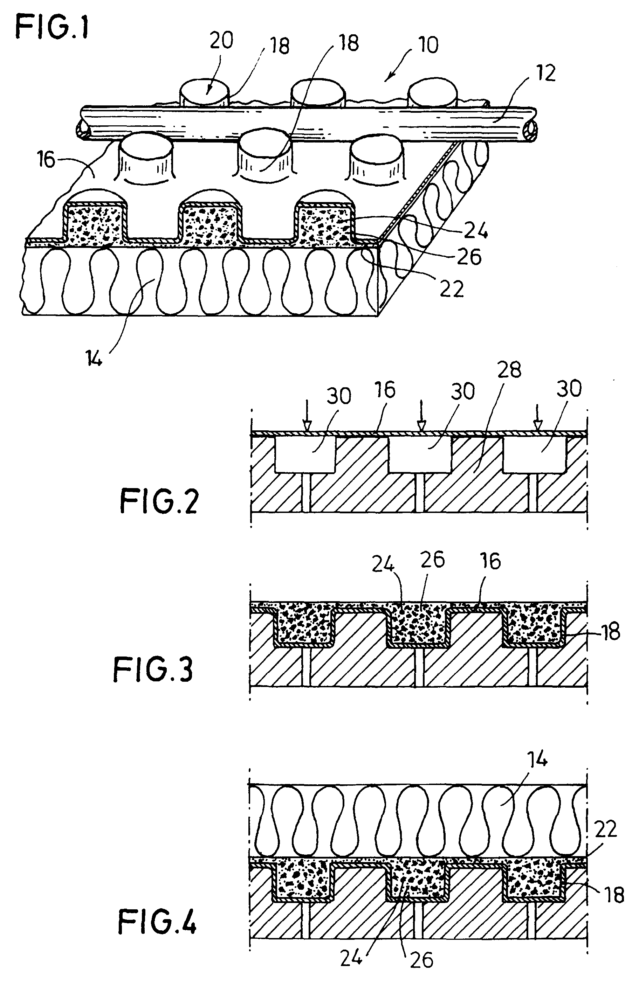

Gemäß Fig. 1 weist ein Dämmelement 10 zum klemmenden Halten von beispielsweise Fußbodenheizungsrohren 12 eine Dämmaterialschicht 14 und eine tiefgezogene Kunststoffolie 16 auf. Bei dem Dämmaterial 14 handelt es sich um ein EPS-Tafelmaterial, das durch Schneiden eines Schaumblocks in Form einer Platte vorliegt. Die Kunststoffolie 16 weist eine Vielzahl von sickenartig ausgebildeten Haltenoppen 18 auf. Zwischen den Noppen 18 verlaufen die Rohre 12, wobei sie klemmend zwischen jeweils benachbarten Noppen 18 gehalten sind. Die Noppen 18 sind an ihren der Dämmaterialplatte 14 abgewandten oberen Enden 20 geschlossen.

Zwischen der Noppenfolie 16 und der Dämmaterialplatte 14 befindet sich eine Zwischenschicht 22, die aus einer Materialmischung aus Kunststoffschaum-Partikeln 24 und einem Bindemittel 26 besteht. Bei dem Material der Kunststoffschaum-Partikel handelt es sich insbesondere um geschäumtes PS-Material, während als Bindemittel insbesondere ein Schmelzkleber eingesetzt wird. Das Material der Zwischenschicht 22 füllt die Noppen 18 innen aus, so daß diese nicht mehr hohl sind. Zur Ausfüllung der Hohlräume der Noppen 18 werden also keine korrespondierenden Erhebungen an der Oberseite der Dämmaterialplatte 14 sondern lediglich die Mischung aus den Kunststoffschaum-Partikeln 24 und dem Bindemittel 26 benötigt. Das so aufgebaute Dämmelement 10 ist auf seiner durch die Noppenfolie 16 gebildeten Oberseite begehbar, ohne daß die Funktionstüchtigkeit der Haltenoppen 18 eingeschränkt wird.

Anhand der Fign. 2 bis 4 soll nachfolgend kurz auf den Herstellungsvorgang des Dämmelements 10 eingegangen werden. Auf ein Tiefziehwerkzeug 28 mit Ausnehmungen 30 wird zunächst die Kunststoffolie 16 aufgelegt. Im nächsten Arbeitsschritt wird durch Erzeugung von Unterdrücken in den Ausnehmungen 30 die Folie 16 zur Herstellung der Noppen 18 verformt. Anschließend wird in die Hohlräume der Noppen 18 sowie auf der gesamten Folie 16 verteilt die Mischung aus den Partikeln 24 und dem Bindemittel 26 eingebracht bzw. aufgetragen. Im letzten Arbeitsschritt wird die Dämmaterialplatte 14 auf die Zwischenschicht 22 aufgelegt und gegen diese gedrückt. Nach Aushärtung bzw. Erstarrung des Bindemittels 26 ist das Dämmelement 10 fertig hergestellt.

Neben der Versteifung der Noppen 18 kommt der Zwischenschicht 22 auch die Aufgabe zu, die Noppenfolie 16 und die Dämmaterialplatte 14 miteinander zu verbinden. Auch zu diesem Zweck befindet sich in dem Material der Zwischenschicht 22 das Bindemittel 26.

Eine andere Möglichkeit der Herstellung des erfindungsgemäßen Dämmelements 10 besteht darin, in einem separaten Arbeitsgang die tiefgezogene Noppenfolie 16 herzustellen. In diesem Fall werden die zuvor anhand der Fign. 3 und 4 beschriebenen Prozeßschritte ohne das Vorhandensein der Noppenfolie 16 im Formwerkzeug durchgeführt. Das sich dabei ergebende fertige Formprodukt aus der Dämmplatte 14 und der mit den Vorsprüngen versehenen Zwischenschicht 22 wird anschließend mit der tiefgezogenen Noppenfolie 16 verbunden, indem letztere auf die Zwischenschicht 22 aufgesteckt wird.

## Patentansprüche

1. Dämmelement für Flächenheizungsrohre, insbesondere Fußbodenheizungsrohre, mit
- einer Dämmplatte (14) aus einem Wärme- und/oder Trittschalldämmaterial und
- einer Folie (16), die eine Vielzahl von sickenartigen Haltevorsprüngen (18) zum klemmenden Halten eines Rohres (12) aufweist,
**dadurch gekennzeichnet,**
- daß zwischen der Dämmplatte (14) und der Folie (16) eine an beide angrenzende Zwischenschicht (22) angeordnet ist, die eine Mischung aus Kunststoffschaum-Partikeln (24) und einem Bindemittel (26) aufweist, und
- daß die Haltevorsprünge (18) mit dem Material der Zwischenschicht (22) ausgefüllt sind.

2. Dämmelement nach Anspruch 1, dadurch gekennzeichnet, daß das Bindemittel (26) im erstarrten Zustand schneidbar ist.

3. Dämmelement nach Anspruch 1 oder 2, dadurch gekennzeichnet, daß das Bindemittel (26) ein Schmelzkleber oder ein schmelzkleberähnliches Material, z.B. Wachs, ist.

4. Dämmelement nach einem der Ansprüche 1 bis 3, dadurch gekennzeichnet, daß die Partikel (24) aus geschäumtem PS, PP, PE oder PVC bestehen.

5. Dämmelement nach einem der Ansprüche 1 bis 3, dadurch gekennzeichnet, daß die Partikel (24) aus einem nicht geschäumten Material bestehen, das durch das Bindemittel (26) zusammengesintert ist.
